# EUROPEAN PATENT APPLICATION

(11) **EP 1 480 107 A2**
(43) Date of publication of application: **24.11.2004**
(21) Application number: 04405306.4
(22) Date of filing: 13.05.2004
(51) Int. Cl.: G06F 1/00

(54) **Method for authentication of a user with an authorizing device, and a security apparatus for carrying out the method**

(30) Priority: 16.05.2003 CH 8802003
(71) Applicant: Berner Fachhochschule Hochschule für Technik und Architektur Biel, 2501 Biel (CH)
(72) Inventor: Müller, Lorenz, 2505 Biel (CH); Jacomet, Marcel, 2543 Lengnau (CH); Cattin-Liebl, Roger, 2540 Grenchen (CH)
(74) Representative: Liebetanz, Michael, Dipl.-Phys.

(57) **Abstract**

The invention relates to an authentication system having a security apparatus (10, 100) which can check all three authenticating factor types for authentications (personal subject matter, secret, biometric characteristic), having an authorizing device (2, 102) and having a certifying institution (5, 105), in which case their private keys, the public keys on the subscribing authorizing devices (102) and the public keys of the connected users (10) can be stored in this certifying institution (5, 105). Furthermore, authentication means (305, 316) are provided there, by means of which an appropriately coded report can be produced, which can be passed via the authorizing device (102) to the user (10). The user (10) decodes this message (310, 311, 312) and transmits the resultant authorization code via the authorizing device (102) to the certifying institution (105). After checking the code in this certifying institution (105), a response (317) which comprises confirmation or rejection is transmitted to the authorizing device (102).

## Description

The invention relates to a method for authentication of a user with an authorizing device according to the precharacterizing clause of Claim 1, and to a security apparatus for carrying out the method according to Claim 6. The invention furthermore relates to an authentication system according to Claim 8 and to a method for operation of an authentication system according to Claim 9.

One simple security element is a credit card, bank card or access code card which, for example, has a magnetic strip or an integrated circuit as an identification element. This identification element is supplied to an authorizing device which then checks a code, the so-called PIN code, of the user of the card.

For the organization behind the authorizing device, there is in this case no certainty that the user is the authorized user, since this user may be using a stolen and/or duplicated card for which he also knows the PIN code.

Security elements and methods for their use have therefore been developed for more far-reaching security requirements, such as those known from EP 1 255 178. In this case, in particular, biometric data may be used in order on the one hand to link the card to the user. The card can therefore now be used only by the user himself. A duplicated or stolen card is now worthless.

Secondly, EP 1 255 178 also discloses a method, however, in which, once the user has entered a first identification code, information is sent to the user directly or by means of the security element to the authorizing device, which information is transformed by a processor in the security element into a further access code to be entered only if the biometric identity of the user has been confirmed by the security element.

The security has therefore been transferred from the authorizing device to the user and his security element or, in other words, the user now entrusts only the card-issuing authority with most of the information relating to his private domain. In this case, he need inform the card-issuing authority only of as much data as is required for correct recording in the list of authorized users. In particular, no biometric data is reported. All that is necessary is to ensure by means of the initialization process that only the authorized person is storing his biometric data on the card. The authorizing device now only requires secure communication with the card (and its user), but does not require any further information relating to the user in order to allow this user to be identified unambiguously. The complexity of the system in the authorizing device or devices is thus moved to the card, so that on the one hand the authorizing device has the advantage of a simpler and thus lower-cost infrastructure while the user can largely protect his private domain, in comparison to known authorization methods.

Against the background of this prior art, the invention is based on the object of specifying a secure method differing from this prior art.

This object is achieved according to the invention for a method having the features of Claim 1.

In this case, the expression authorizing device should be understood as meaning that institution that the user makes use of. This may be a user of a building with secure access; it may be a cash dispenser, or may be an Internet provider of goods and/or services, or many other things.

The authorizing device and the institution which issues the card may be identical institutions or two different institutions; in other words, a card check can be carried out only in the authorizing device, or this authorizing device can carry out the check with the institution issuing the card. The two units may also be coincident.

In principle, three criteria may be used for authorization: for example something one has (token, in this case the card); for example something one knows (a secret, in the exemplary embodiments the alphabet associated with the fingers); for example what one is (biometry, in the exemplary embodiments, the fingerprints, per se). Using the method according to the invention it is possible to check not only one or two of the criteria (factors) but all three factors without impeding the availability of the authentication (for example owing to the lack of appropriate readers for biometry) or by complicated protocols (for example independent checking of all three criteria), while at the same time ensuring data protection. This improves the availability and the ergonomics and guarantees protection of the private domain, which overall leads to user acceptance, which is so critical.

The combination of a fingerprint sequence with a secret may be extended in the case of the method described here such that the secret is regenerated whenever the card is used; it can thus not be discovered by third parties by observation or carelessness. The secret (the knowledge of the card holder) lies in a method as to how a secret code is produced (alphabet) and not in the sequence (code) itself.

Further advantageous exemplary embodiments are characterized in the dependent claims.

The invention will now be explained with reference to a number of advantageous exemplary embodiments and in conjunction, by way of example, with the drawings, in which:
- Figure 1: shows a highly schematic illustration of a security apparatus in the area of an authorizing device according to the invention,
- Figure 2: shows a sequence diagram relating to the initialization of a security apparatus as shown in Figure 1, and
- Figure 3: shows a sequence diagram for the use of a security apparatus as shown in Figure 1.

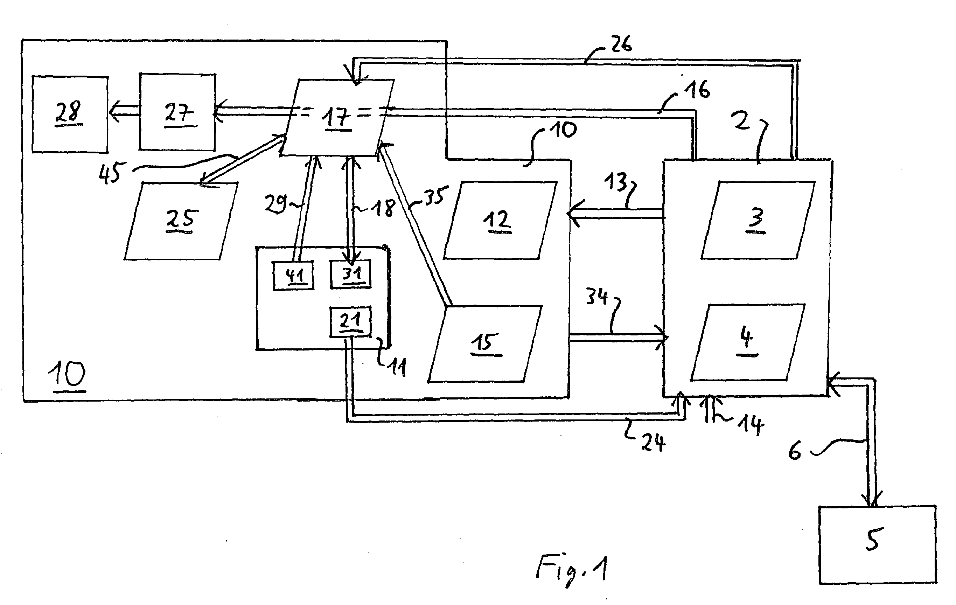

Figure 1 shows a highly schematic illustration of a security apparatus 10 in the area of an authorizing device 2 according to the invention. The authorizing device 2 has at least one output appliance 3 and at least one input appliance 4, either directly or indirectly. The expression indirectly makes it clear to a person skilled in the art that the output appliance may be a loudspeaker or a screen for the user, which are connected to his computer which, for example, is connected via a modem or Internet link to the central computer of the authorizing device 2. The expression direct output appliance 3 may be understood by a person skilled in the art as a screen, a loudspeaker or other transmission sources, such as infrared transmitters, radio transmitters, RFID, etc, which are directly connected to the local computer of the authorizing device 2. It should also be mentioned that the authorizing device 2 may itself be the card issuing authority or may be a corresponding separate institution 5, which is generally connected to the authorizing devices 2 via data lines 6.

The user now approaches the authorizing device 2 with his security apparatus 10. Personal data and card-related data 11 are stored by the user on the security apparatus 10. This may be biometric data 31, code words or other graphical code characters, in particular, which can be entered. Card-related data 21 can in general be checked and may preferably exist in a machine-legible form such as a magnetic strip, a chip or a bar code, or identification number which can be transmitted by means of an RFID tag. The security apparatus 10 also has a receiving means 12, by means of which data which is output via the or an output appliance 3 of the authorizing device 2 can be transmitted, as illustrated by the arrow 13, to the security apparatus 10.

The method for secure authentication now operates in particular as described in the following text.

First of all, a first information item, represented by the arrows 14, 24, 34, is input in one of the said input appliances 4 of the authorizing device 2. This may be an identification number which is transmitted by means of a direct user input on the input appliance 4 (arrow 14), a direct biometric input (arrow 14), which is also a direct user input, or else a data transmission 24 of data 21 which can be emitted freely from the security apparatus 10, for example information which is stored on a bar code, a magnetic strip, a chip or an RFID-TAG, which is read by the authorizing device 2. The data may also be entered on the security apparatus 10 in an input appliance 15, and may be transmitted (arrow 34). This data from the input 14 is processed by the authorizing device 2. The authorizing device 2 produces first data items 16 and possibly second data items 26 directly or indirectly, which are output via the at least one output appliance 3 of the authorizing device 2. The first data items 16 may be received and decoded by the security apparatus 10 only if the user identifies in advance what is indicated by the checking element with the reference symbol 17. This may be done by a user data input on and in the security apparatus 10 by means of the input appliance 15. This may be a keyboard input in the sense of the transmission 35 of information which is known only to the user, or the like. A user secret may be checked by the input of data 26 by a dedicated check using this keyboard input. This may also be a biometric input 25 but in which case this data interchange 45 with the checking element 17 may also be bi-directional in the sense of a protocol. The elements 15 and 25 may be physically formed by the same input apparatus. The secret and/or the biometric data are/is stored as data 31 in the memory 11, and are/is interchanged to the necessary extent from the checking element 17 via the connection 18. If the security requirements are not stringent, this step of checking via the second data 26 may also be omitted, particularly if the decoded first data items 16 could not be used by an unauthorized user of the card, as will be seen further below. However, if the input exists, then the input which has been made is compared with an expected input from the memory 11 in the security apparatus 10.

If the comparison of the data is successful, the said data items 16 which are output by the said output appliance 3 of the authorizing device 2 are passed through the checking element 17, and are received by the security apparatus 10. In a converter 27, the security apparatus 10 then converts the received data to information, as an input request, which can be identified by the user on an output appliance 28. This may be an input of an identification number (PIN) by the user in one of the said input appliances 4 of the authorizing device 2 directly (corresponding to the arrow 14) or indirectly by means of an input appliance 15 of the security device 10 (corresponding to the arrow 34). The input is then compared in the authorizing device 2 (or in the institution 5) with the input that is expected with respect to the data that is produced. If the data comparison is successful, the authentication is confirmed by the authorizing device 2.

For an appropriate requirement, the security of the method can be enhanced by designing the biometric input appropriately. The existence of a secret or a partial secret of the user can be checked by a dedicated check by means of the data 26, using the keyboard input or a combination of 25 and 15. For the user, the check of his secret can be manifested in the data 26 by requesting him to place a specific finger on the biometric reader, or to place a sequence of fingers on the biometric reader or readers. This secret may also be stored directly as data 41 in the memory 11 without any check by the second data 26, such that, on request by the security apparatus 10 when the data 16 arrives, specific fingers or a sequence of fingers must be placed on the biometric reader. This results in a secret. In addition to this secret being stored directly in the memory 11, it may be stored in the form of a structure principle. The principle then allows a secret to be constructed on an ad-hoc basis, with the secret being changed continually and being checked, for example, by the data 26 or by means of a random structure. The data which can be represented by the user can check which secret (what biometric sequence) should be checked. The checking data 26 may be a letter code or an alphanumeric code, with each or specific letters representing a finger which is to be checked in the biometric check in the element 17 (for example A = thumb, B = index finger to E = little finger, in each case on the right hand, F = thumb on the left hand, etc, or some other implementation).

The biometric data may be fingerprint data or else other data which essentially uniquely indicates an individual, be this data which is associated with physiological characteristics, or data representing a typical behavior pattern, or other appropriate identification elements.

The secret 41 of the biometric input may comprise a sequential or parallel biometric input which can be compared with the or a corresponding part of the stored biometric data. In the event of a sequential request, the pattern is defined as mentioned above, or is transmitted as second data items 26. The same applies to the parallel biometric input, when the input appliance has more than one biometric sensor. This may also comprise a combination of different biometric data and input appliances, such as a retina scan with finger identification (of a specific finger) or the pushing of different predetermined biometric finger sensors with predetermined fingers in a predetermined sequence.

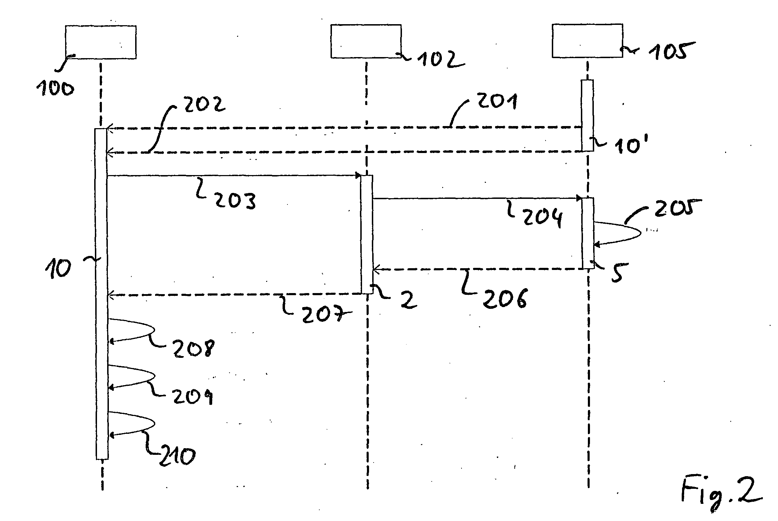

Figure 2 shows a sequence diagram for the initialization of a security apparatus as shown in Figure 1. The same features are provided with the same reference symbols in all of the figures.

Provision is made for there to be a single certifying institution 105, which issues the security apparatuses 10/10'. A large number of users 100 then use these apparatuses with a number of authorizing devices 102, which, in this case, may for example be quite different service concerns which wish to profit from the simplicity and security of the system.

The user 100 has the security apparatus 10, the authorizing device 102 has an access computer 2, and the certifying institution 105 uses the computer that is annotated by the reference symbol 5 in Figure 1. Initially, the certifying institution 105 produces the security apparatus 10', stores the secret key of an asymmetric encryption pair on it, links this security apparatus with a user number, and stores the associated public key on its own computer 5, possibly only in the form that is certified by its own private key. The security apparatus 10 is then sent to the user 100 (arrow 201), with an initialization code (arrow 202) being dispatched separately, as normal.

After receiving the two elements, the user 100 contacts an authorizing device 102, the first authorizing device 102. The connection 202 is set up to the associated computer 2, and the initialization code is transmitted. This is passed on 204 to the computer 5 in the certifying institution 105, which checks it 205 and sends back the result 206. The computer 2 in the authorizing device 102 then transmits 207 the public key of the authorizing device 102 and control commands for the further processing in the security apparatus 10.

The security apparatus 10 then passes through an initialization mode 208. Coding of the fingerprint sequence is then 209 either predetermined such that it is fixed, or the corresponding alphabet is indicated, which may be necessary for decoding of the second data items 26 in order to prepare for the input request.

The biometric data is then 210 recorded, either with the data being recorded in the sequence of the indicated coding or in any desired sequence, for example from the thumb to the little finger. The sequence of the steps 209 and 210 may, of course, then be reversed. The security device 10 is then ready for use.

If the user or authorizing device 102 and the certifying authority 105 are coincident, the method is appropriately simplified since only one communication within the concern need then take place.

If the authorizing device 102 itself issues the security apparatuses 10 which it obtains from the certification authority 105, the steps 204 to 206 are omitted, since they are carried out during the process of presenting the security apparatuses 10 to the authorizing device 102.

If reinitialization of the stored biometric data were to be necessary, then the method as shown in Figure 2 may be carried out with the exception of the step 201, with the step 201 being replaced by the request from the holder of the security apparatuses 10 for reinitialization.

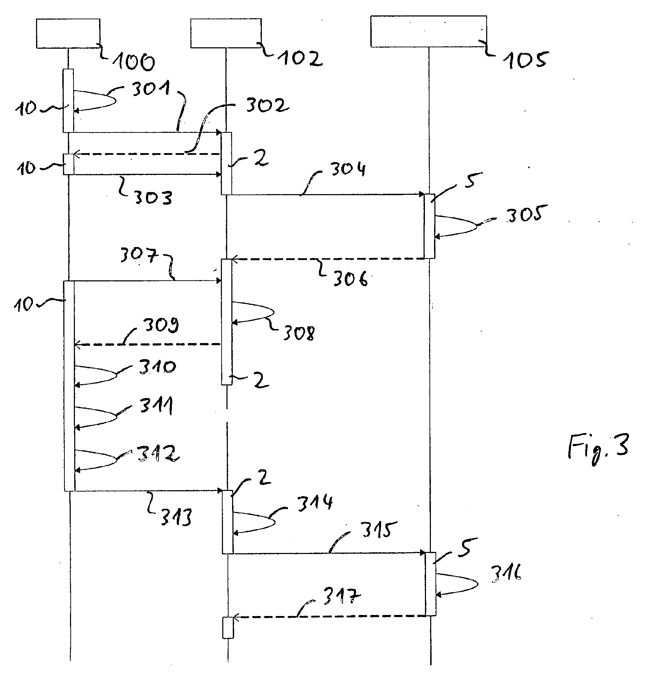

Figure 3 shows a sequence diagram for the use of a security apparatus 10 as shown in Figure 1. The reference symbol 301 denotes the activation of the security apparatus 10, for example card activation by presentation of the card to a radio transmitter (passive RFID), by activation of the elements 15 or 25 by the user, by connection of an activation card to the security apparatus, or by insertion of the card in a reader. In this case, the computer 2 in the authorizing device 102 checks identification information (arrow 302) and, for example, transmits this as the information 21 from the memory 11 (arrow 303). This information is generally transmitted directly, corresponding to the arrow 304, to the computer 5 in the certifying institution 105, which produces a data stream from a coded report (arrow 305) corresponding to the transmitted number, and this is then transmitted to the computer 2 (arrow 306). The coded report, with an uncoded identification for the authorizing device 102, comprises the authorization code with a coding with the public key of the user 100 and the secret key of the authorizing device 102. One possible refinement of the code transmission to the security apparatus is implemented by means of a method as in EP 1 255 178, that is to say, corresponding to the procedure 308, graphical information is transmitted to an input appliance 12 on the security apparatus 10, whilst this is being set up in an appropriate manner such that it is ready to receive, corresponding to the reference symbol 307. For example, the reference 307 may indicate the card being held on the screen, or some other action indicating readiness. In this case, the report is transmitted to the security apparatus 10, corresponding to the arrow 309.

It is clearly evident from this that a large number of options are provided for transmission and can also be implemented at the same time, for example by radio or Bluetooth, infrared, cable, RFID, acoustically or optically (for example bar code).

The information is processed further (arrow 310) in the security apparatus 10; in the solution addressed in EP 1 255 178, the graphical information is scanned in and processed, and appropriate implementations will be familiar to those skilled in the art, together with other transmission options, as well.

The received data is then decrypted (arrow 311) and is output on the output appliance 28. The decryption process is carried out using the secret key of the user 100 (stored in 11), and the public key for the authorizing device 102 that is stored on the card, thus resulting in the authorization code.

The output may be a display of a bar code which is transmitted, corresponding to the arrow 313, to the computer 2 in the authorizing device 102, and is converted (arrow 314). This may be an alphanumeric display on a display which is entered by an input appliance 15 or 4 via a keyboard or a pointer appliance. The data which is converted as an authorization code is transmitted as shown by the arrow 315 to the computer 5, where it is checked (arrow 316) and is transmitted back to the computer 2 in the authorizing device 102 in the form of a response 317, so that the confirmation of the authentication can be accepted or rejected there, in order to initiate or to reject the action desired by the user.

This is the standard solution. If the security requirements do not need to be as stringent, then the entire area between the arrow 306 and the arrow 316 can be excluded, so that the response to the authorization as shown by the arrow 317 is sent directly after the check 305.

If further access checks are required in addition once the initial access has been made, the protocol can be repeated fully or to a reduced extent after a specific time or when specific circumstances occur. The coded report in the course of such a repetition may contain and transmit information which is directly related to the preceding dialogue between the holder of the apparatus 10 and the authorizing institution. In particular, this may be a hash code for an electronic agreement, and an associated method instruction.

In the case of a manual input, for example of a user name on a website, the user name for authorization of a door opening, a manual input 14 is made instead of the steps 301 to 303 and leads, within the authorizing device 102, to its implementation in the card number, which is then transmitted to the certifying institution 105. The report 306 then also includes an initialization sequence, in order that the card can receive the message 309. Since registration with the security apparatus 10 has then not been carried out initially either, the authorizing device 102 must then also be selected from the card, in order to use the correct public key. Then, in the example of website registration, the authorization code may be displayed alphanumerically on a display, so that it can be entered appropriately on the website (corresponding to the step 313).

If the user 100 wishes to register his security apparatus 10 with a second provider, that is to say with a further authorizing device 102, then this second provider must be able to make sure of the identity of the user .100. One possibility would be to store the user data in the certifying institution 105, although, from the international perspective, this could generate data protection problems. One solution is the storage of hash values of the user data for the user 100 in the certifying institution 105, so that there is no raw data there, but a user can verify the user data without any problems.

The example has been described using asymmetric encryption. In principle, it is also possible to carry out the method and to implement the apparatus using other encryption techniques, for example symmetrical encryption. This may, for example, be after prior negotiation of a common symmetrical key using the so-called Diffie-Hellmann method.

With respect to data protection, it should be noted that the user of a card such as this has to provide the card-issuing authority with only as much data as is required for correct recording in the list of authorized users. In particular, there is no absolute necessity to report biometric data. All that is necessary is to ensure by means of the initialization process that only the authorized person can store his biometric identity in the card.

## Claims

1. Method for authentication of a user with an authorizing device (2, 5), with the authorizing device (2, 5) directly or indirectly (6) having at least one output appliance (3) and at least one input appliance (4), with the user having a security apparatus (10) in which personal data is stored by him and which has a receiving means (12) using which data (13) which is output via an output appliance (3) of the authorizing device can be transmitted to the security apparatus (10), with the method comprising the following steps:
a.) inputting of a first information item into one of the said input appliances (4) of the authorizing device (14, 24, 34),
b.) processing of the input via the authorizing device which produces first (16) and/or second (26) data items directly or indirectly, which are output via at least one output appliance (3) of the authorizing device (2),
c.) identification of the user by the security apparatus (10) by means of a data input (15, 25) by the user on and to the security apparatus (10),
d.) comparison of the input made in step c.) with an expected input in a checking element (17) of the security apparatus (10),
e.) if the comparison of the data in step d.) is successful, recording of the first data items (16), which were output by the said output appliance (3) of the authorizing device in accordance with step b.), by the security apparatus (10),
f.) conversion (27) of the data recorded by the security apparatus (10) to information which can be identified by the user, as an input request (28),
g.) inputting of the input request by the user in one of the said input appliances (4) of the authorizing device (2), directly or indirectly by means of the security device (15),
h.) comparison of the input made in step g.) with the input, expected with respect to the data (16) produced, in the authorizing device (2, 5), and
i.) if the comparison of the data in step h.) is successful, confirmation of the authentication by the authorizing device (2, 5).

2. Method according to Claim 1, in which the data input in step c.) comprises an input of biometric data by the user into the said security apparatus (10), and/or in that, in step d.) the user is identified by the security apparatus (10) by comparison of the said biometric input with the or a corresponding part of the stored biometric data.

3. Method according to Claim 1 or 2, in which the biometric input comprises a fixed secret (41) or a dynamically adaptable secret (41), which comprises a sequential or parallel biometric input which can be compared with the or with a corresponding part of the stored biometric data.

4. Method according to one of Claims 1 to 3, in which the data input in step c.) is initialized by the second data items (26), and in the process a determination is made in particular as to which input is awaited and will be checked in step d.) and/or in that the data input in steps a.) and/or c.) is made by means of RFID.

5. Method according to one of Claims 1 to 4, in which the information which could be identified by the user according to step f.) as an input request is an alphanumeric, graphical or acoustic information item, which can be implemented by the input appliance, in particular in the form of a keyboard or graphical pointing appliance or drawing appliance.

6. Security apparatus (10) for carrying out the method according to one of the preceding claims having a memory (11) in which personal data can be stored by a user, having a receiving means (12) for recording data (13), which has been output via an output appliance (3) of an authorizing device (2, 5), in the security appliance (10), **characterized by** a checking element (17) for comparison of the input made in step c.) of the method with an expected input, a converter device (27) for the data recorded by the security apparatus (10) to information which can be identified by the user, and an output unit (28) for outputting the input request..

7. Security apparatus (10) according to Claim 6, **characterized in that** the memory (11) comprises data from the group of freely available identification data (11), biometric data (31) and a secret (41).

8. Authentication system having a security apparatus (10), an authorizing device (102) and a certifying institution (105), in which case the private key for the certifying institution (105), the public key for the subscribing authorizing devices (102) and the public keys for the connected users (10) can be stored in the certifying institution (105), in that authentication means (305, 316) are provided in the certifying institution (105) and can be used to produce a report which is coded in accordance with the authorizing device (102) that is involved corresponding to the user (10) requesting authorization via the said authorizing device (102), and which report can be passed via the authorizing device (102) to the user (10), in that the user (10) requesting authorization has a decoding unit (27) in which the report containing the authorization code can be decoded by means of his secret key and the public key of the authorizing device (102) which can be stored in the security apparatus (10), and with transmission means being provided such that, after receiving and passing on the authorization code from the user (10) via the authorizing device (102) to the certifying institution (105), the latter can transmit the checked response, provided with confirmation or rejection of the authentication, to the authorizing device (102).

9. Method for operation of an authentication system, which comprises a security apparatus (10), an authorizing device (102) and a certifying institution (105), with the private key of the certifying institution (105), with the public key of the subscribing authorizing devices (102) and the public keys of the connected users (10) being stored in the certifying institution (105), and with the secret key of the said security apparatus (10) and the public key of the authorizing device (102) being stored in the security apparatus (10), **characterized by** the following steps,
a.) that a user (10) who is requesting authorization transmits identification information to the authorizing device (102),
b.) that the authorizing device (102) transmits this or modified identification information to the certifying institution (105),
c.) that the certifying institution (105) produces a report which is coded corresponding to the authorizing device (102) that is involved and the requesting user (10),
d.) in that this report is passed via the authorizing device (102) to the user (10),
e.) in that the user requesting authorization has a decoding unit (27) in his security apparatus (10), in which decoding unit (27) the report which contains the authorization code is decoded by means of his secret key and the public key of the authorizing device (102), which is stored in the security apparatus (10),
f.) in that the authorization code is passed from the user (10) via the authorizing device (102) to the certifying institution (105),
g.) in that the certifying institution (105) checks the authorization code and transmits a response, which contains a confirmation or rejection of the authentication to the authorizing device (102) which handles this appropriately for the user.
